# FASCICULE DE BREVET EUROPEEN

(11) **EP 3 236 281 B1**
(45) Date de publication et mention de la délivrance du brevet: **16.06.2021**
(21) Numéro de dépôt: 17167399.9
(22) Date de dépôt: 20.04.2017
(51) Int. Cl.: G01S 7/41, G01S 13/10, G01S 13/22, G01S 13/24, G01S 13/52

(54) **PROCÉDÉ D'OPTIMISATION DE LA DÉTECTION DE CIBLES MARINES ET RADAR METTANT EN OEUVRE UN TEL PROCÉDÉ**
OPTIMIERUNGSVERFAHREN DER ERKENNUNG VON ZIELEN IM MEER, UND RADAR ZUR UMSETZUNG DIESES VERFAHRENS
METHOD FOR OPTIMISING THE DETECTION OF MARINE TARGETS AND RADAR IMPLEMENTING SUCH A METHOD

(30) Priorité: 22.04.2016 FR 1600669
(43) Date de publication de la demande: 25.10.2017
(73) Titulaire: THALES, 92400 Courbevoie (FR)
(72) Inventeur: CORRETJA, Vincent, 33608 Pessac cedex (FR); GUERRINI, Gilles, 33608 Pessac cedex (FR); SFEZ, Thierry, 78851 Elancourt cedex (FR); MONTIGNY, Richard, 33608 Pessac cedex (FR); CHABROUX, Jean-Marc, 78851 Elancourt cedex (FR)
(74) Mandataire: Marks & Clerk France

(56) Documents cités:
- CN-A- 104 155 631
- FR-A1- 2 875 013
- US-A1- 2014 097 979
- US-B1- 6 861 974

## Description

La présente invention concerne un procédé d'optimisation de la détection de cibles marines. Elle concerne également un radar mettant en œuvre un tel procédé.

Dans le domaine de la détection de cibles marines, un problème technique à résoudre est l'optimisation et l'auto-adaptation en temps réel de la forme d'onde radar utilisée pour la détection des cibles, en fonction des besoins opérationnels et de l'environnement acquis et analysé par le radar en temps réel. Contrairement à la terre, l'environnement maritime perçu par le radar est fluctuant (météo, courant, vagues, ...).

Actuellement sur les radars de surveillance, le choix de la forme d'onde utilisée est plutôt réalisé de manière manuelle par l'opérateur parmi plusieurs formes d'ondes prédéfinies disponibles dans le radar, l'opérateur étant la personne qui manipule le radar.

Les inconvénients de cette solution sont notamment les suivants :
- Le temps nécessaire passé par l'opérateur pour analyser la situation opérationnelle (type de cible à détecter, environnement de mer, conditions météorologiques, etc, ...) et pour choisir la forme d'onde adaptée. De ce fait, l'expérience montre que l'opérateur utilise parfois une forme d'onde sans la changer durant une passe radar, voire une mission entière au risque de ne pas adapter la forme d'onde à l'environnement ;
- L'opérateur doit, pour faire ce choix à bon escient, avoir été formé d'une part, et disposer d'une expérience non négligeable d'autre part ;
- La forme d'onde étant choisie parmi un nombre limité de formes d'onde déjà prédéfinies (typiquement entre 3 et 5 pour les traitements de détection air/mer), même le meilleur choix de l'opérateur n'assure pas que les paramètres de la forme d'onde soient parfaitement adaptés à la cible à traiter et à l'environnement présent au moment de la mission, il est à noter que le radar a de nombreuses capacités qui ne sont pas exploitées par l'opérateur par manque de temps et de connaissance ;
- Le choix de forme d'onde est fait, par l'opérateur, en fonction de sa propre perception et évaluation de l'environnement, souvent enrichie par la connaissance d'informations météorologiques. Toutefois, cette évaluation peut être limitée en précision, notamment du fait d'une connaissance imprécise de l'opérateur, et ne pas forcément correspondre à celle perçue par le radar lors de son traitement de détection. Elle dépend de l'opérateur et de sa charge de travail.

Une gestion automatique de la forme d'onde existe aussi dans certains radars de combat. Elle permet, en particulier pour les modes air-air, de gérer le passage entre la veille et la poursuite, le domaine d'accrochage à longue distance et celui à plus courte distance, ou éventuellement les passages de cibles en secteurs travers. Ce type de gestion permet effectivement d'alléger la charge de l'opérateur et d'améliorer les performances du radar. Toutefois, d'une part elle ne tient pas compte de l'environnement maritime fluctuant, comme le fouillis de mer notamment, qui est un facteur primordial de performance, et d'autre part elle réalise une sélection parmi des formes d'onde prédéfinies, mais n'optimise pas en temps réel les paramètres de la forme d'onde.

Un document US2014/0097979 A1 divulgue un procédé pour un réseau d'informations radar cognitif. Un document FR 2 875 013 A1 divulgue un gestion de forme d'onde utilisant une cartographie Doppler par segmentation statistique.

Un but de l'invention est notamment de surmonter les inconvénients précités. A cet effet, l'invention a pour objet un procédé d'optimisation de la détection de cibles marines effectuée par un radar aéroporté, ladite détection étant réalisée pour une mission donnée, ledit procédé comporte au moins :
- Une phase d'analyse de l'environnement à l'aide d'une forme d'onde préalablement choisie, les signaux acquis avec cette forme d'onde étant analysés par des moyens de traitement pour en déduire des caractéristiques d'environnement ;
- Une phase d'élaboration d'une onde de détection optimale en fonction desdites caractéristiques d'environnement et des caractéristiques de ladite mission ;
ladite forme d'onde de détection étant déterminée à partir d'une forme d'onde générique dont on fait varier des paramètres parmi la liste suivante :
- la fréquence de récurrence ;
- la fréquence d'émission ;
- l'agilité de fréquence ;
- la bande d'émission ;
- le facteur de forme ;
- la polarisation.

Lesdites caractéristiques d'environnement comportent les caractéristiques du fouillis de mer, ces caractéristiques appartenant à la liste suivante :
- niveau de réflectivité du fouillis, obtenu par une analyse radiométrique ;
- distribution statistique de la puissance de fouillis reçue, obtenue par une analyse statistique ;
- position et étalement spectral du fouillis, obtenu par une analyse spectrale ;
- présence ou non de pointes de fouillis.

Les caractéristiques de ladite mission comportent les caractéristiques du type de cible à détecter, ces caractéristiques étant par exemple comprises dans la liste suivante :
- la longueur des cibles ;
- la surface équivalente radar des cibles ;
- la structure des cibles ;
- la vitesse des cibles.

Les caractéristiques de ladite mission comportent par exemple le domaine distance sur lequel on cherche à détecter les cibles.

Ladite mission est par exemple une mission de patrouille maritime ou de surveillance maritime, et notamment une mission de sauvetage en mer.

L'invention a également pour objet un radar mettant en œuvre le procédé précédemment décrit.

D'autres caractéristiques et avantages de l'invention apparaîtront à l'aide de la description qui suit, faite en regard de dessins annexés qui représentent :
- La figure 1, un état de l'art antérieur ;
- La figure 2, une illustration du procédé selon l'invention ;
- La figure 3, un exemple d'arbre de décision pouvant être utilisé dans un procédé selon l'invention ;
- La figure 4, le principe de fonctionnement d'un radar selon l'invention.

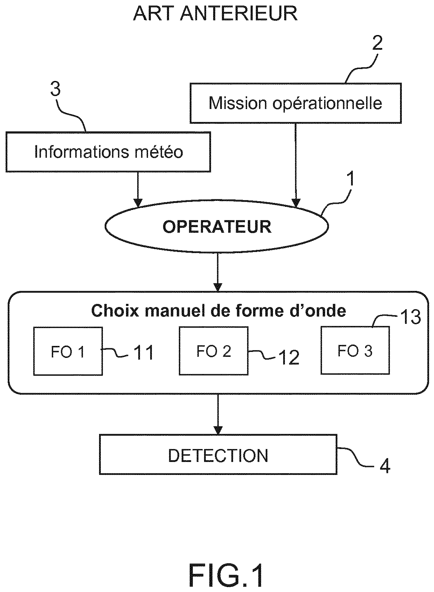

La figure 1 illustre une solution de sélection de forme d'onde selon l'art antérieur. Un opérateur 1 effectue manuellement le choix d'une forme d'onde parmi plusieurs formes d'onde 11, 12, 13 possibles. Ce choix est conduit en fonction de la mission opérationnelle 2 et de l'environnement, en particulier les conditions météorologiques 3. En fonction de ces éléments, le choix est fixé avec pour objectif d'optimiser les capacités de détection 4 du radar. Les inconvénients de cette solution ont été exposés précédemment.

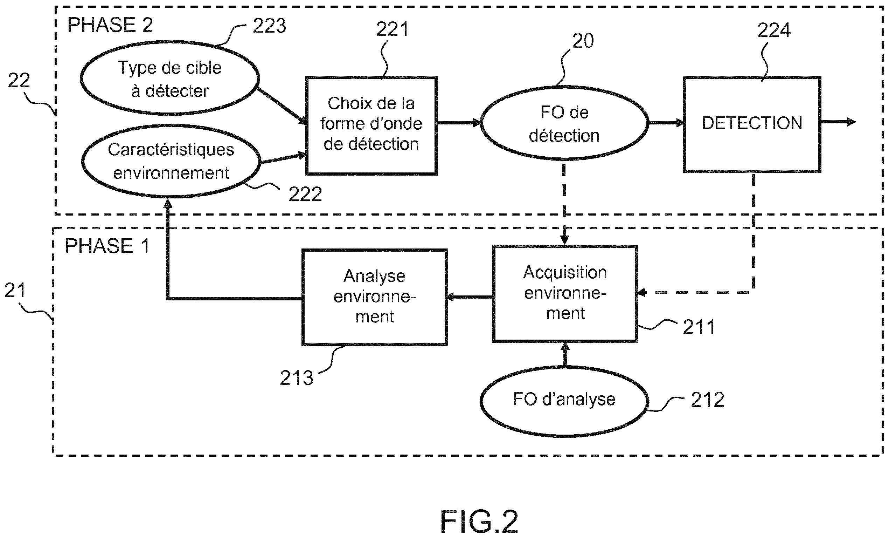

La figure 2 illustre les phases de mise en œuvre possibles d'un procédé selon l'invention. Grâce à l'invention, le radar est capable d'évaluer son environnement sur tout son domaine de détection afin de l'analyser et d'en déduire, en fonction des caractéristiques de la mission, la forme d'onde la plus adaptée à cette mission, c'est-à-dire la forme d'onde optimale. En d'autres termes, cette forme d'onde est celle qui assure la performance de détection maximale. A cette fin, le procédé selon l'invention comporte au moins deux phases.

Dans une première phase 21, une analyse de l'environnement est effectuée sur tout le domaine de détection du radar, puis dans une deuxième phase 22, une fois l'environnement connu, la forme d'onde de détection optimale est élaborée automatiquement en fonction des besoins opérationnels de la mission et de la connaissance de l'environnement. La mission est notamment une mission de patrouille ou de surveillance maritime. Elle est par exemple effectuée dans le cadre d'un sauvetage en mer. Dans cet exemple, un radar selon l'invention a alors pour mission de détecter la ou les cibles marines, à secourir.

Dans la première phase 21, le radar effectue l'acquisition 211 des données d'environnement à l'aide d'une forme d'onde 212, dite forme d'onde d'analyse, déterministe, choisie au préalable. Cette forme d'onde est conçue pour l'analyse de l'environnement. L'acquisition des signaux pour l'analyse se fait au préalable pendant un laps de temps de plusieurs secondes afin de balayer tout le domaine distance azimut que le radar doit couvrir, par exemple sur un tour d'antenne radar.

Ensuite, les signaux acquis avec cette forme d'onde 212 sont analysés par un traitement 213, dit traitement d'analyse. A l'issue de cette analyse, on obtient les caractéristiques d'environnement 222.

Dans la deuxième phase 22, le radar élabore automatiquement 221 la forme d'onde de détection optimale 20 en fonction du résultat d'analyse (les caractéristiques d'environnement) et de la mission, donnant le type de cibles 223 à détecter en choisissant tous les paramètres primaires de sa forme d'onde et du rayonnement électromagnétique (par exemple :
- fréquence de récurrence,
- fréquence d'émission,
- agilité de fréquence,
- bande d'émission,
- facteur de forme, sa largeur d'impulsion, polarisation, ...).

Une fois la détection 224 effectuée sur un type de cible, on peut recommencer le cycle d'analyse et de détection pour un autre type de cible. Si la phase détection 22 dure un certain temps, on peut envisager de repasser par une phase d'analyse 21 pour remettre à jour automatiquement la forme d'onde de détection 20 choisie en fonction de l'environnement. Dans ces conditions, la forme d'onde de détection en cours peut également servir de forme d'onde d'analyse si cette dernière est compatible des données attendues, pouvant être utilisée pour l'acquisition 211 de l'environnement.

Plusieurs critères et/ou caractéristiques sont pris en compte pour sélectionner la forme d'onde d'analyse et pour sélectionner la forme d'onde de détection.

### Sélection de la forme d'onde d'analyse :

Un but de la forme d'onde d'analyse est de déterminer les caractéristiques principales du fouillis de mer influant sur le choix de la forme d'onde de détection. Ces caractéristiques sont les suivantes :
- niveau de réflectivité du fouillis, obtenu par une analyse radiométrique ;
- distribution statistique de la puissance de fouillis reçue, obtenue par une analyse statistique ;
- position et étalement spectral du fouillis, obtenus par une analyse spectrale ;
- présence ou non de pointes de fouillis dites « spikes ».

Cette forme d'onde est choisie pour permettre les mesures des caractéristiques suivantes :
- bande émise :
   ∘ sa résolution radiale doit être suffisamment fine pour observer les éventuels phénomènes de spikes ;
- fréquence de récurrence :
   ∘ sa fréquence de répétition des impulsions est suffisamment élevée pour réaliser l'analyse spectrale sans repliement de spectre ;
   ∘ afin de ne pas fausser l'analyse statistique et radiométrique en provoquant des repliements en distance avec une fréquence de répétition trop élevée, un compromis est établi entre la contrainte précédente et celle-ci, compromis qui peut aboutir par exemple à un BFR (mode à Basse Fréquence de Récurrence) haut, ou aboutir à l'émission de plusieurs blocs d'émission à des fréquences de répétition des impulsions différentes ;
- fréquence d'émission par rapport à l'agilité de fréquence :
   ∘ l'agilité de fréquences émises est aussi prise en compte pour l'analyse radiométrique et statistique mais est combinée avec la contrainte inverse pour l'analyse spectrale, plusieurs blocs d'émission à des fréquences de répétition et à des fréquences d'émission différentes pouvant être une solution ;
- polarisation :
   ∘ la polarimétrie est aussi choisie éventuellement en fonction de l'angle de site, mais une analyse suivant deux polarimétries différentes est une solution avantageuse, quelques blocs d'émission étant en polarisation horizontale et quelques blocs étant en polarisation verticale ;
- facteur de forme, ou largeur d'impulsion :
- la puissance moyenne émise permet de couvrir tout le domaine distance à détecter.

Enfin, le temps d'acquisition du fouillis avec la forme d'onde d'analyse doit rester court, compatible avec les besoins de la mission.

### Sélection de la forme d'onde de détection en fonction du besoin opérationnel et de la connaissance du fouillis :

Le procédé selon l'invention utilise le principe d'une forme d'onde générique faisant appel à plusieurs paramètres. L'optimisation de la forme d'onde se fait par l'optimisation de ces paramètres. Ces paramètres sont les suivants :
- sa fréquence de récurrence ;
- sa fréquence d'émission ;
- l'utilisation d'une agilité de fréquence ou non ;
- sa bande d'émission ;
- son facteur de forme, ou largeur d'impulsions ;
- sa polarisation ;
en fonction de la mission opérationnelle et plus particulièrement :
- la longueur du type de cibles que l'on cherche à détecter ;
- la surface équivalente radar (SER) du type de cibles que l'on cherche à détecter ;
- la vitesse du type de cibles que l'on cherche à détecter ;
- la structure du type de cibles que l'on cherche à détecter ; par exemple un bateau (parallèle à la surface de l'eau) ou un périscope (perpendiculaire avec la surface de l'eau)
- le domaine distance sur lequel on cherche à détecter des cibles ;
et en fonction de la connaissance du fouillis, en terme de :
- niveau de réflectivité du fouillis ;
- distribution statistique de la puissance de fouillis reçue ;
- position et étalement spectral du fouillis ;
- présence ou non de spikes.

Le tableau ci-dessous résume les dépendances possibles entre les paramètres de la forme d'onde et les caractéristiques opérationnelles et la connaissance du fouillis.

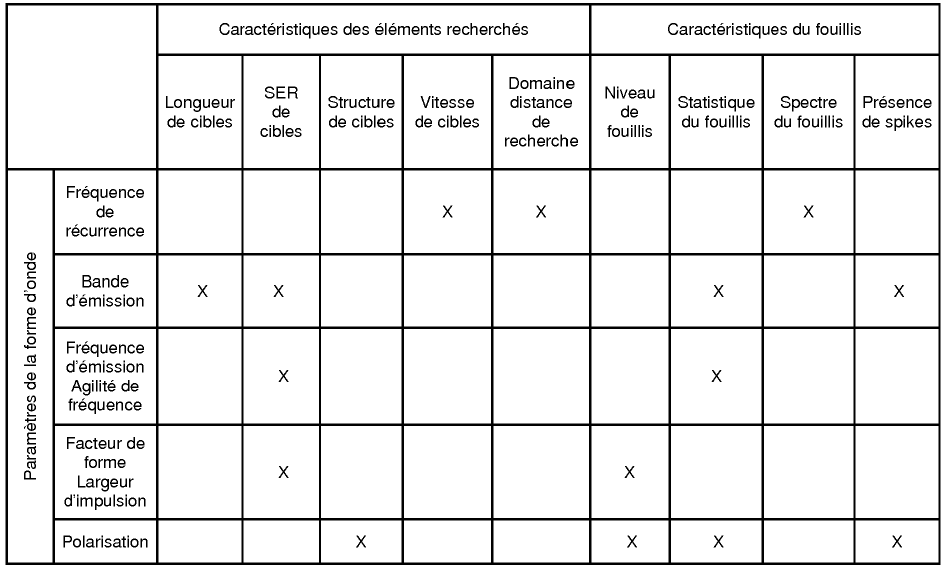

Une fois la forme d'onde de détection 20 établie, la détection 224 peut être effectuée.

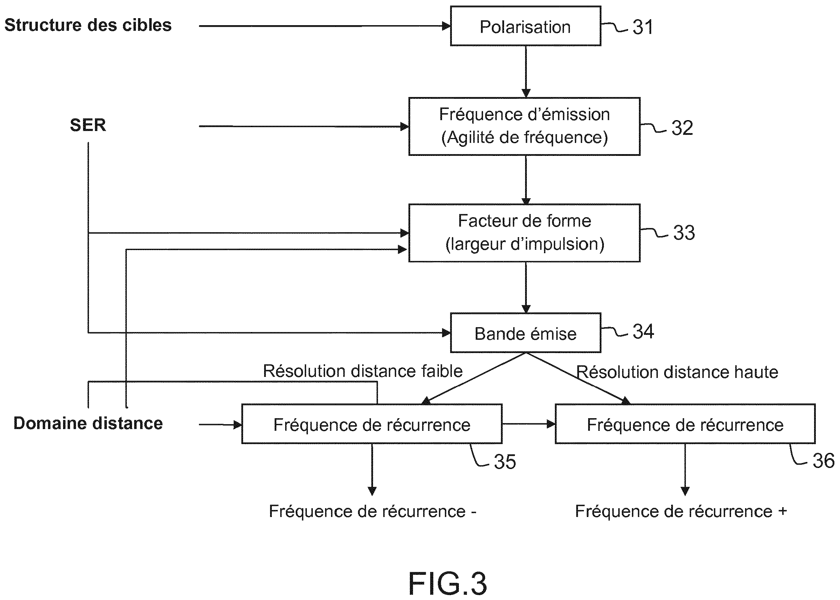

La figure 3 illustre un exemple simple d'arbre de décision pouvant être utilisé pour gérer un antagonisme de choix de paramètres. En effet, certains paramètres peuvent être antagonistes. Par exemple, il est compliqué de détecter une cible de faible SER à une grande distance. L'exemple de la figure 3 illustre un cas où le radar choisit de privilégier la bande émise, c'est-à-dire la résolution distance, par rapport au domaine distance de recherche. Plus précisément, en considérant successivement les différents paramètres de la forme d'onde de détection en fonction des caractéristiques de la mission opérationnelle, on commence par analyser la structure des cibles à détecter pour définir 31 la polarisation, puis leur SER est analysée pour en déduire 32 la fréquence d'émission et l'utilisation ou non d'une agilité de fréquence. La SER est encore utilisée pour définir 33 le facteur de forme et pour définir 34 la bande émise. Une fois la bande émise fixée, la fréquence de récurrence est déterminée selon que la résolution en distance est faible 35 ou selon que la résolution en distance est haute.

De manière plus générale, un arbre de décision du type de celui de la figure 3 est par exemple établi, prenant en compte tous les paramètres de la forme d'onde à optimiser et toutes les contraintes en entrée, définies notamment par le type de cible à détecter et les caractéristiques d'environnement.

Un arbre de décision est une manière de résoudre ce type de problème d'antagonisme. D'autres techniques peuvent être utilisées comme l'utilisation d'un système expert par exemple.

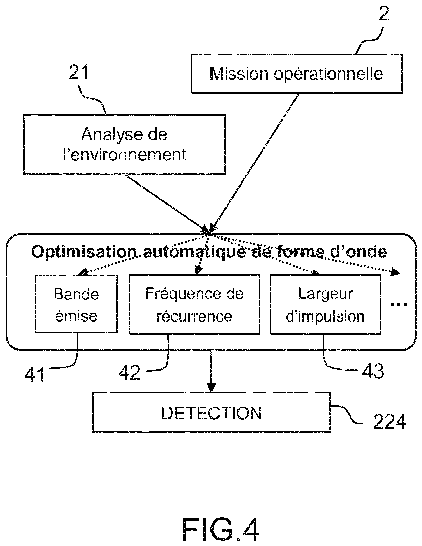

La figure 4 illustre le principe de fonctionnement d'un radar mettant en œuvre le procédé selon l'invention. L'opérateur n'intervient plus pour sélectionner la forme d'onde, le choix étant réalisé automatiquement. Le radar analyse 21 en temps réel son environnement sur tout son domaine de détection, puis en fonction du résultat de son analyse 21 et de la mission opérationnelle 2, définit automatiquement la forme d'onde optimale, c'est-à-dire maximisant la probabilité de détection, pour chaque zone de son domaine de détection.

La forme d'onde est élaborée à partir d'une forme d'onde générique définie par les paramètres 41, 42, 43 décrits précédemment. L'optimisation de la forme d'onde consiste à définir en temps réel la valeur optimale de ces paramètres. Le radar n'a donc plus à sa disposition un nombre limité de formes d'onde mais au contraire un nombre quasi illimité.

A titre d'exemple, si le besoin opérationnel est de détecter des cibles moyennes jusqu'à l'horizon radar, alors le radar analyse la mission et détermine les paramètres de la forme d'onde générique. Ainsi, il en découle que :
- les moyennes cibles correspondent à des structures horizontales, entraînant le choix d'une polarisation horizontale ;
- les moyennes cibles ont une SER de taille moyenne, permettant d'utiliser opportunément une agilité de fréquence, la cible répondant à l'une au l'autre fréquence ;
- la largeur d'impulsions est déterminée :
   ∘ de manière à permettre une détection lointaine ;
   ∘ en fonction des possibilités de facteur de forme de l'émetteur du radar ;
- la résolution en distance est de l'ordre de plusieurs dizaines de mètres (correspondant à une SER moyenne) ;
   ∘ d'où l'on déduit la sélection de la bande émise, en l'occurrence une bande émise faible ;
- le fait d'avoir une bande faible fait que l'on peut avoir une fréquence de récurrence très faible ;
- la fréquence de récurrence est sélectionnées faible de manière à ce que la distance ambigüe soit supérieure à la distance de l'horizon.

L'invention permet avantageusement de maximiser la probabilité de réussite d'une mission opérationnelle en utilisant les informations connues *a priori* de cette mission afin d'optimiser la forme d'onde de détection utilisée pour remplir cette mission. Une telle mission est la détection de cibles marines, par exemple pour des opérations de sauvetage en mer.

Les principaux avantages de l'invention sont notamment les suivants :
- Auto-adaptation et personnalisation du traitement de détection radar afin d'optimiser les capacités 4 du radar ;
- Banalisation et simplification de la formation des opérateurs ;
- Diminution du niveau d'expertise requis des opérateurs ;
- Réduction de la quantité de stress et de charge de travail des opérateurs durant leurs missions afin qu'ils puissent se concentrer sur celles-ci grâce à un moindre effort porté sur l'utilisation du radar.

## Revendications

1. Procédé d'optimisation de la détection de cibles marines effectuée par un radar aéroporté, **caractérisé en ce que** la détection étant réalisée pour une mission donnée, ledit procédé comporte au moins :
- Une première phase (21) dans laquelle ledit radar effectue l'acquisition (211) de données d'environnement à l'aide d'une forme d'onde (212) préalablement choisie pour déterminer les caractéristiques du fouillis de mer présent dans ledit environnement, les signaux acquis avec cette forme d'onde étant analysés par des moyens de traitement (213) pour en déduire des caractéristiques d'environnement (222) ;
- Une deuxième phase (22) dans laquelle ledit radar élabore une onde de détection (20) en fonction desdites caractéristiques d'environnement et des caractéristiques de ladite mission (2) ;
ladite forme d'onde de détection (20) étant élaborée à partir d'une forme d'onde générique dont on définit des paramètres en fonction desdites caractéristiques, lesdits paramètres étant parmi la liste suivante :
- la fréquence de récurrence ;
- la fréquence d'émission ;
- l'agilité de fréquence ;
- la bande d'émission ;
- le facteur de forme ;
- la polarisation.
les caractéristiques du fouillis de mer appartenant à la liste suivante :
- niveau de réflectivité du fouillis, obtenu par une analyse radiométrique ;
- distribution statistique de la puissance de fouillis reçue, obtenue par une analyse statistique ;
- position et étalement spectral du fouillis, obtenu par une analyse spectrale ;
- présence ou non de pointes de fouillis.
les caractéristiques de ladite mission (2) comportant les caractéristiques du type de cible à détecter.

2. Procédé selon la revendication 1, **caractérisé en ce que** les caractéristiques du type de cibles à détecter sont comprises dans la liste suivante :
- la longueur des cibles ;
- la surface équivalente radar des cibles ;
- la structure des cibles ;
- la vitesse des cibles.

3. Procédé selon l'une quelconque des revendications précédentes, **caractérisé en ce que** les caractéristiques de ladite mission (2) comportent le domaine distance sur lequel on cherche à détecter les cibles.

4. Procédé selon l'une quelconque des revendications précédentes, **caractérisé en ce que** ladite mission (2) est une mission de patrouille maritime ou de surveillance maritime.

5. Procédé selon la revendication 4, **caractérisé en ce que** ladite mission est une mission de sauvetage en mer.

6. Radar, **caractérisé en ce qu'**il est configuré pour mettre en œuvre le procédé selon l'une quelconque des revendications précédentes.

## Patentansprüche

1. Verfahren zur Optimisierung der Detektion von Zielen im Meer durch einen Fluggerät-Bordradar, **dadurch gekennzeichnet, dass** die Detektion für eine gegebene Mission erfolgt, wobei das Verfahren mindestens Folgendes umfasst:
- eine erste Phase (21), während welcher der Radar die Erfassung (211) von Umweltdaten mithilfe einer Wellenform (212) bewerkstelligt, welche zuvor ausgewählt wurde, um die Merkmale des in der Umgebung vorhandenen Seaclutters zu bestimmen, wobei die mit dieser Wellenform erfassten Wellen durch Verarbeitungsmittel (213) analysiert werden, um hiervon Umweltmerkmale (222) abzuleiten;
- eine zweite Phase (22), während welcher der Radar eine Detektionswelle (20) angesichts der Umweltmerkmale und der Merkmale der Mission (2) aufbaut;
wobei die Detektionswellenform (20) anhand einer generischen Wellenform aufgebaut wird, deren Parameter man anhand der Merkmale definiert, wobei es sich um Parameter aus der folgenden Liste handelt:
- die Wiederholungsfrequenz;
- die Sendefrequenz;
- die Frequenzagilität,
- das Sendeband;
- der Formfaktor;
- die Polarisation,
wobei die Merkmale des Seaclutters in folgender Liste enthalten sind:
- Niveau der Reflexionsfähigkeit des Clutters, welches durch eine radiometrische Analyse erzielt wird;
- statistische Verteilung der Stärke des empfangenen Clutters, welche durch statistische Analyse erzielt wird;
- Position und spektrale Ausbreitung des Clutters, welches durch eine Spektralanalyse erzielt wird;
- Vorhandensein oder nicht von Clutter-Peaks,
wobei die Merkmale der Mission (2) die Merkmale der Art des zu detektierenden Ziels umfassen.

2. Verfahren nach Anspruch 1, **dadurch gekennzeichnet, dass** die Merkmale der Art des zu detektierenden Ziels in folgender Liste umfasst sind:
- die Länge der Ziele,
- der Radarquerschnitt der Ziele;
- die Struktur der Ziele;
- die Geschwindigkeit der Ziele.

3. Verfahren nach einem der vorhergehenden Ansprüche, **dadurch gekennzeichnet, dass** die Merkmale der Mission (2) den Entfernungsbereich umfassen, über welchen man die Ziele zu detektieren sucht.

4. Verfahren nach einem der vorhergehenden Ansprüche, **dadurch gekennzeichnet, dass** die Mission (2) eine Seepatrouillen- oder eine Seewachtpatrouillenmission ist.

5. Verfahren nach Anspruch 4, **dadurch gekennzeichnet, dass** die Mission eine See-Rettungsmission ist.

6. Radar, **dadurch gekennzeichnet, dass** er konfiguriert ist, um das Verfahren nach einem der vorhergehenden Ansprüche auszuführen.

## Claims

1. Method for optimising the detection of marine targets by an airborne radar, **characterised in that** the detection is being made for a given mission, said method includes at least:
- a first phase (21) in which said radar acquires (211) environmental data using a waveform (212), which is chosen beforehand to determine the characteristics of the sea clutter present in said environment, the signals acquired with this waveform being analysed by processing means (213) in order to deduce therefrom environmental characteristics (222); and
- a second phase (22) in which said radar generates a detection wave (20) depending on said environmental characteristics and characteristics of said mission (2);
said detection waveform (20) being generated from a generic waveform, parameters of which are chosen depending on said characteristics, said parameters being from the following list:
- repetition frequency;
- transmission frequency;
- frequency agility;
- transmission band;
- form factor;
- polarisation;
the characteristics of the sea clutter belonging to the following list:
- level of reflectivity of the clutter, obtained by a radiometric analysis;
- statistical distribution of the received clutter power, obtained by a statistical analysis;
- spectral spread and position of the clutter, obtained by a spectral analysis;
- presence or not of clutter spikes;
the characteristics of said mission (2) include the characteristics of the type of target to be detected.

2. Method according to Claim 1, **characterised in that** the characteristics of the type of targets to be detected are comprised in the following list:
- the length of the targets;
- the radar cross section of the targets;
- the structure of the targets;
- the speed of the targets.

3. Method according to any one of the preceding claims, **characterised in that** the characteristics of said mission (2) include the distance domain in which it is sought to detect the targets.

4. Method according to any one of the preceding claims, **characterised in that** said mission (2) is a maritime patrol or maritime surveillance mission.

5. Method according to Claim 4, **characterised in that** said mission is a sea rescue mission.

6. Radar, **characterised in that** it is able to implement the method according to any one of the preceding claims.
